# EUROPEAN PATENT APPLICATION

(11) **EP 4 822 726 A1**
(43) Date of publication of application: **14.10.2026**
(21) Application number: 25169442.8
(22) Date of filing: 09.04.2025
(51) Int. Cl.: H01G 11/00, H01G 9/028, H01G 9/15, H01G 9/00

(54) **COMPOSITION COMPRISING ACID AND DIAMINE COMPOUNDS FOR USE IN THE MANUFACTURE OF ELECTROLYTIC CAPACITORS**

(71) Applicant: Heraeus Epurio GmbH, 63450 Hanau (DE)
(72) Inventor: Mottweiler, Dr. Jakob, 51368 Leverkusen (DE); Intelmann, Dr. Matthias, 51368 Leverkusen (DE); Merker, Dr. Udo, 51368 Leverkusen (DE)
(74) Representative: Herzog IP Patentanwalts GmbH

(57) **Abstract**

The present invention relates to a process for the preparation of an electrolytic capacitor, comprising the process steps:
**A)** providing a porous electrode body (100) made of an electrode material (100a), the porous electrode body (100) comprising
a dielectric layer (100b) that at least partially covers a surface of the electrode material (100a), and
a solid electrolyte layer (100c) that comprises a conductive polymer **CP1,** wherein the dielectric layer (100b) is arranged between the electrode material (100a) and the solid electrolyte layer (100c);

**B)** applying a primer solution onto at least a part of the surface of the porous electrode body (100), wherein the primer solution comprises
**i)** a diamine comprising at least 3 carbon atoms, preferably 4 to 12 carbon atoms, more preferably 8 to 12 carbon atoms,
**ii)** an acid that is characterized by a weight loss of at least 80 % at a temperature of 220°C as determined by thermal gravimetric analysis, and
**iii)** a solvent;
preferably followed by an at least partial removal of solvent **iii)**;
**C)** applying a liquid composition comprising
**I)** a conductive polymer **CP2**, and
**II)** a solvent;
onto at least a part of the surface of the porous electrode body (100) obtained in process step **B)**;
**D)** at least partially removing solvent **II)** for the formation of a polymeric outer layer (101) that at least partially covers the surface of the porous electrode body (100).

The invention also relates to a liquid composition and to the use of the liquid composition as a primer solution for improving the coverage of a solid electrolyte layer (100c) with a polymeric outer layer (101), wherein the solid electrolyte layer (100c) comprises a conductive polymer **CP1** and wherein the polymeric outer layer (101) comprises a conductive polymer **CP2**.

## Description

### FIELD OF THE INVENTION

The present invention relates to a process for the preparation of an electrolytic capacitor, to a liquid composition and to the use of the liquid composition as a primer solution.

### BACKGROUND OF THE INVENTION

A standard electrolytic capacitor generally consists of a porous metal electrode, an oxide layer disposed on the metallic surface, an electrically conductive material, generally a solid, which is introduced into the porous structure, an external electrode (contact), such as a silver layer, and other electrical contacts and an encapsulation. One frequently used electrolytic capacitor is the tantalum electrolytic capacitor, of which the anode electrode is made from the valve metal tantalum, on which a uniform, dielectric layer of tantalum pentoxide has been produced through anodic oxidation (also referred to as *"forming"*)*.* A liquid or solid electrolyte forms the cathode of the capacitor. Aluminium capacitors, of which the anode electrode is made from the valve metal aluminium, on which a uniform, electrically insulating aluminium oxide layer is produced as a dielectric by means of anodic oxidation, are also frequently used. Here also, a liquid electrolyte or a solid electrolyte form the cathode of the capacitor. The aluminium capacitors are generally embodied as wound capacitors or stack-type capacitors.

In view of their high electrical conductivity, π-conjugated polymers are particularly suitable as solid electrolytes in the capacitors described above. π-conjugated polymers are also referred to as conductive polymers or as synthetic metals. They are gaining increasing commercial significance because, by comparison with metals, polymers have advantages with regard to processing, weight and the selective adjustment of properties through chemical modification. Examples of known π-conjugated polymers include polypyrroles, polythiophenes, polyanilines, polyacetylenes, polyphenylenes and poly(p-phenylene-vinylenes), wherein poly(3,4-ethylene-dioxythiophene) (PEDOT) is a particularly important polythiophene which is used technically, because it has a very high conductivity in its oxidized form.

In addition to a low equivalent series resistance (ESR), modern electrolytic capacitors require a low leakage current and good stability with respect to external stresses. High mechanical stresses that may greatly increase the leakage current of the capacitor anode occur in particular during the production process when encapsulating the capacitor anodes.

Stability toward such stresses and therefore a low leakage current may primarily be achieved by an approximately 5 to 50 µm-thick polymeric outer layer made of conductive polymers on the capacitor anode. Such a layer serves as a mechanical buffer between the capacitor anode and the cathode-side contact connection. This prevents, for example, the silver layer (contact connection) from coming into direct contact with the dielectric or damaging it in the event of mechanical stress, thus increasing the leakage current of the capacitor. Usually, these polymeric outer layers are also prepared by means of PEDOT/PSS-dispersions which additionally may comprise binders, as disclosed for example in DE-A-10 2005 033 839.

To fulfil the above-mentioned tasks, the conductive polymeric outer layer must cover especially the edges and corners of the capacitor body, since the highest mechanical stresses occur thereon. In order to facilitate a complete coverage of the surface of the solid electrolyte layer with the polymeric outer layer, it is known to cover the surface of the solid electrolyte layer with primer solutions comprising crosslinking agents, such as diamines. These diamines function as a crosslinker between the PEDOT/PSS-complex in the solid electrolyte layer and the PEDOT/PSS-complex in the polymeric outer layer. Primer solutions that can be used for that purpose are, for example, disclosed in WO 2010/089111 A1. Usually, the diamines are applied in the form of solutions comprising the diamine and a corresponding acid. In US 2016/211082 A1, for example, solutions comprising a diamine and a weak organic acid, such a solution comprising a salt of ethylene diamine and acetic acid, are used as primer solutions.

However, it has been observed that the acids contained in the primer solutions can negatively affect the properties of the capacitors, especially in a humid environment and/or when the capacitors are exposed to heat. Thus, during the production of aluminium stack or tantalum polymer electrolytic capacitors, some of the acids remain in the conductive polymer layer and, depending on the capacitor type, can lead to corrosion, migration of copper ions, or an increase in ESR. This is in so far disadvantageous as the requirements for the longevity and reliability of capacitors will increase in the future in electronics and automotive industries. To counteract this adverse effect of the acid component of the primer solutions, US 8,808,403 B2 proposes subjecting the capacitors to an additional washing step with water after formation of the polymeric outer layer to remove the acid component. However, such a washing step is costly and can also lead to defects in the polymeric outer layer.

The present invention was based on the object of overcoming the disadvantages resulting from the prior art in connection with the process for the preparation of electrolytic capacitors, preferably in connection with solid electrolyte capacitors, more preferably in connection with capacitors known from the prior art that comprise a polymeric outer layer on top of a solid electrolyte layer, wherein the polymeric outer layer is based on π-conjugated polymers such a PEDOT, even more preferably in connection with capacitors known from the prior art that comprise a polymeric outer layer based on PEDOT/PSS.

In particular, the present invention was based on the object of providing a process for the preparation of solid electrolyte capacitors that comprise a polymeric outer layer on top of a solid electrolyte layer, wherein primer solutions comprising a diamine and an acid are used to facilitate a complete coverage of the surface of the solid electrolyte layer with the polymeric outer layer and wherein it is not necessary to apply a separate washing step in order to remove any residual amounts of the acid that may still be present between the solid electrolyte layer and the polymeric outer layer or within the polymeric outer layer. The process should allow the production of electrolytic capacitors that are characterized by a low leakage current and that maintain their electrical properties, particularly in terms of the leakage current, the ESR and the capacitance, even under humid atmosphere and/or under exposure to heat for as long as possible.

Moreover, it was an object of the present invention to provide a primer solution that can be used in such a process for the preparation of an electrolyte capacitor.

### SUMMARY OF THE INVENTION

A contribution to at least partly solving at least one, preferably more than one, of the above objects is made by the independent claims. The dependent claims provide preferred embodiments which contribute to at least partly solving at least one of the objects.

|**1a**| A contribution to solving at least one of the objects according to the invention is made by a 1^{st} embodiment of a process for the preparation of an electrolytic capacitor, comprising the process steps:
**A)** providing a porous electrode body made of an electrode material, the porous electrode body comprising:
   a dielectric layer that at least partially covers a surface of the electrode material, and
   a solid electrolyte layer that comprises a conductive polymer **CP1**,
   wherein the dielectric layer is arranged between the electrode material and the solid electrolyte layer;
**B)** applying a primer solution onto at least a part of the surface of the porous electrode body, preferably onto at least a part of the solid electrolyte layer, wherein the primer solution comprises
   i) a diamine comprising at least 3 carbon atoms, preferably 4 to 12 carbon atoms, more preferably 8 to 12 carbon atoms,
   **ii)** an acid that is characterized by a weight loss of at least 80 % at a temperature of 220°C, preferably of at least 80 % at a temperature of 200°C and more preferably of at least 80 % at a temperature of 180°C, in each case determined by thermal gravimetric analysis, and
   **iii)** a solvent;
   preferably followed by an at least partial removal of solvent **iii);**
**C)** applying a liquid composition comprising
   **I)** a conductive polymer **CP2,** and
   **II)** a solvent, preferably water;
   onto at least a part of the surface of the porous electrode body obtained in process step **B);**
**D)** at least partially removing solvent **II)** for the formation of a polymeric outer layer that at least partially covers the surface of the porous electrode body, wherein the at least partial removal of the solvent is preferably accomplished by heating the porous electrode bodies obtained in process step **C)** to a temperature in the range from 80 to 200°C, preferably 100 to 180°C and more preferably 120 to 160°C.

Surprisingly, it has been discovered that by selecting, as the acid component in the primer solution, an acid that is characterized by a weight loss of at least 80 % at a temperature of 220°C, preferably of at least 80 % at a temperature of 200°C and more preferably of at least 80 % at a temperature of 180°C, particularly by selecting such an acid in combination with a diamine such that the corresponding salt is characterized by a weight loss of at least 80 % at a temperature of 250°C, preferably of at least 80 % and a temperature of 225°C, more preferably of at least 80 % at a temperature of 200°C, and even more preferably of at least 80 % at a temperature of 190°C, the acid-component can successfully be evaporated during process step **D)** so that there is no need to remove any remains of the acid-component in a separate washing step.

|**2a**| According to a preferred embodiment of the process according to the invention, the solid electrolyte layer comprises, as conductive polymer **CP1,** a polythiophene. This preferred embodiment is a 2^{nd} embodiment of the process according to the present invention, that preferably depends on the 1^{st} embodiment.

|**3a**| According to a further preferred embodiment of the process according to the invention, the solid electrolyte layer comprises, as conductive polymer **CP1,** a foreign-doped polythiophene that is present in the form of particles of a complex comprising a cationic polythiophene and a polyanion, a self-doped polythiophene or a combination of foreign-doped polythiophene and a self-doped polythiophene. This preferred embodiment is a 3^{rd} embodiment of the process according to the present invention, that preferably depends on the 1^{st} or the 2^{nd} embodiment.

|**4a**| According to a further preferred embodiment of the process according to the invention, the polymeric outer layer comprises, as conductive polymer **CP2,** a polythiophene. This preferred embodiment is a 4^{th} embodiment of the process according to the present invention, that preferably depends on any of the 1^{st} to the 3^{rd} embodiment.

|**5a**| According to a further preferred embodiment of the process according to the invention, the polymeric outer layer comprises, as conductive polymer **CP2,** a foreign-doped polythiophene that is present in the form of particles of a complex comprising a cationic polythiophene and a polyanion, a self-doped polythiophene or a combination of foreign-doped polythiophene and a self-doped polythiophene. This preferred embodiment is a 5^{th} embodiment of the process according to the present invention, that preferably depends on any of the 1^{st} to the 4^{th} embodiment.

|**6a**| According to a further preferred embodiment of the process according to the invention, the foreign-doped polythiophene is PEDOT/PSS. This preferred embodiment is a 6^{th} embodiment of the process according to the present invention, that preferably depends on the 3^{rd} or the 5^{th} embodiment.

|**7a**| According to a further preferred embodiment of the process according to the invention, the self-doped polythiophene is selected from the group consisting of poly(4-[(2,3-dihydrothieno-[3,4-b]-[1,4]dioxin-2-yl)methoxy]-propane-1-sulfonic acid), poly(4-[(2,3-dihydro-thieno-[3,4-b]-[1,4]dioxin-2-yl)methoxy]-butane-1-sulfonic acid) (PEDOT-S) or poly-(4-[(2,3-dihydrothieno[3,4-b][1,4]-dioxin-2-yl)methoxy]butane-2-sulfonic acid) and a combination of at least two of these polythiophenes. This preferred embodiment is a 7^{th} embodiment of the process according to the present invention, that preferably depends on the 3^{rd} or the 5^{th} embodiment.

|**8a**| According to a further preferred embodiment of the process according to the invention, the salt of the diamine **i)** and the acid **ii)** is characterized by a weight loss of at least 80 % at a temperature of 250°C, preferably of at least 80 % and a temperature of 225°C, more preferably of at least 80 % at a temperature of 200°C, and even more preferably of at least 80 % at a temperature of 190°C, in each case determined by thermal gravimetric analysis. By controlling the weight loss of the salt to be above the limits defined above it is also possible to ensure that remains of the primer salt can be removed in process step D). This preferred embodiment is an 8^{th} embodiment of the process according to the present invention, that preferably depends on any of the 1^{st} to the 7^{th} embodiment.

|**9a**| According to a further preferred embodiment of the process according to the invention, the salt of the diamine **i)** and the acid **ii)** is characterized by a weight loss of less than 80 % at a temperature of 132°C as determined by thermal gravimetric analysis. This preferred embodiment is a 9^{th} embodiment of the process according to the present invention, that preferably depends on any of the 1^{st} to the 8^{th} embodiment.

|**10a**| According to a further preferred embodiment of the process according to the invention, the salt of the diamine **i)** and the acid **ii)** is characterized by a solubility in water or ethanol at a temperature of 25°C in the range from 5 g/L to 400 g/mol, preferably 25 g/L to 350 g/L and more preferably 40 g/L to 150 g/L. This preferred embodiment is a 10^{th} embodiment of the process according to the present invention, that preferably depends on any of the 1^{st} to the 9^{th} embodiment.

|**11a**| According to a further preferred embodiment of the process according to the invention, the diamine **i)** comprises 4 to 12 carbon atoms, preferably 8 to 12 carbon atoms. This preferred embodiment is an 11^{th} embodiment of the process according to the present invention, that preferably depends on any of the 1^{st} to the 10^{th} embodiment.

|**12a**| According to a further preferred embodiment of the process according to the invention, the diamine **i)** is alkane-alpha,omega-diamine of the formula H₂N-(CH₂)ₓ-NH₂, wherein x is in the range from 4 to 12, preferably in the range from 8 to 12. This preferred embodiment is a 12^{th} embodiment of the process according to the present invention, that preferably depends on any of the 1^{st} to the 11^{th} embodiment.

|**13a**| According to a further preferred embodiment of the process according to the invention, the diamine **i)** is selected from the group consisting of 1,8-diaminooctane, 1,9-dimaninononane, 1,10-diaminodecane, 1,11-diaminoundecane, 1,12-diaminododecane and a combination of at least two of these diamines, wherein 1,10-diaminodecane is particularly preferred. This preferred embodiment is a 13^{th} embodiment of the process according to the present invention, that preferably depends on any of the 1^{st} to the 12^{th} embodiment.

|**14a**| According to a further preferred embodiment of the process according to the invention, the acid **ii)** has a pKa-value in the range from -2 to 7, preferably in the range from 0 to 6 and more preferably in the range from 2 to 5. This preferred embodiment is a 14^{th} embodiment of the process according to the present invention, that preferably depends on any of the 1^{st} to the 13^{th} embodiment.

|**15a**| According to a further preferred embodiment of the process according to the invention, the acid **ii)** is an organic acid carrying at least one carboxylic acid group. This preferred embodiment is a 15^{th} embodiment of the process according to the present invention, that preferably depends on any of the 1^{st} to the 14^{th} embodiment.

|**16a**| According to a further preferred embodiment of the process according to the invention, the acid **ii)** is an aromatic or aliphatic mono- or dicarboxylic acid. This preferred embodiment is a 16^{th} embodiment of the process according to the present invention, that preferably depends on the 15^{th} embodiment.

|**17a**| According to a further preferred embodiment of the process according to the invention, the acid **ii)** is selected from the group consisting of formic acid, acetic acid, citric acid, butyric acid, crotonic acid, malonic acid, pivalic acid, propionic acid, maleic acid, oxalic acid, phenylglyoxylic acid, pyruvic acid, 2-ketobutyric acid, 3-oxopentanoic acid, 2-hydroxyisobutyric acid, 2-hydroxy-2-methylbutyric acid, 2-ethyl-2-hydroxybutyric acid, 2-methylpropionic acid, 2-methylheptanoic acid, 2-methylvaleric acid, 2-methylhexaoic acid, 2-methylbutanoic acid, 3-methylbutanoic acid, 2,2-dimethylbutyric acid, trans-2,3-dimethylacrylic acid, heptanoic acid, hexanoic acid, valeric acid, 4-pentanoic acid, and combinations of at least two of these acids. This preferred embodiment is a 17^{th} embodiment of the process according to the present invention, that preferably depends on any of the 1^{st} to the 16^{th} embodiment.

|**18a**| According to a further preferred embodiment of the process according to the invention, the molar ratio of the acid **ii)** to the diamine **i)** in the primer solution is in the range from 0.5 to 2.0, preferably in the range from 0.8 to 1.5 and more preferably in the range from 0.9 to 1.1. This preferred embodiment is an 18^{th} embodiment of the process according to the present invention, that preferably depends on any of the 1^{st} to the 17^{th} embodiment.

|**19a**| According to a further preferred embodiment of the process according to the invention, the solvent **iii)** is water, a linear or branched C₁- to C₆-alcohol, such as methanol, ethanol, isopropanol, n-propanol, n-butanol, isobutanol or tert-butanol, a cyclic C₃- to C₈-alcohol, such as cyclohexanol, or a mixture of at least two of these solvents. Particular preference is given to water and mixtures of water with these alcohols or with mixtures of these alcohols, very particular preference to water, ethanol and mixtures thereof. This preferred embodiment is a 19^{th} embodiment of the process according to the present invention, that preferably depends on any of the 1^{st} to the 18^{th} embodiment.

|**20a**| According to a further preferred embodiment of the process according to the invention, the primer solution comprises the diamine **i)** and the acid **ii)** in a total amount in the range from 1 to 40 wt.-%, preferably in the range from 2 to 35 wt.-%, more preferably in the range from 3 to 20 wt.-%, even more preferably in the range from 4 to 10 wt.-%, in each case based on the total weight of the primer solution. This preferred embodiment is a 20^{th} embodiment of the process according to the present invention, that preferably depends on any of the 1^{st} to the 19^{th} embodiment.

|**21a**| According to a further preferred embodiment of the process according to the invention, the primer solution has a pH-value determined at 25°C in the range from 2 to 10, preferably in the range from 4 to 8 and more preferably in the range from 5 to 7. This preferred embodiment is a 21^{st} embodiment of the process according to the present invention, that preferably depends on any of the 1^{st} to the 20^{th} embodiment.

|**22a**| According to a further preferred embodiment of the process according to the invention, the process further comprises the step of:

### E) encapsulation.

This preferred embodiment is a 22^{nd} embodiment of the process according to the present invention, that preferably depends to any of the 1^{st} to the 21^{st} embodiment.

|**23a**| According to a further preferred embodiment of the process according to the invention, the porous electrode body, after process step **D)** has been performed and before performing process step **E),** is not washed, particularly not washed with water or an alcoholic solution, to remove at least a part of the acid **ii)** located between the solid electrolyte layer and the polymeric outer layer. This preferred embodiment is a 23^{rd} embodiment of the process according to the present invention, that preferably depends on the 22^{nd} embodiment.

|**24a**| According to a further preferred embodiment of the process according to the invention, the electrolytic capacitor is an aluminium capacitor or a tantalum capacitor. This preferred embodiment is a 24^{th} embodiment of the process according to the present invention, that preferably depends to any of the 1^{st} to the 23^{rd} embodiment.

|**1b**| A contribution to solving at least one of the objects according to the invention is also made by a 1^{st} embodiment of a liquid composition, preferably a primer solution, that comprises:
**i)** a diamine comprising at least 3 carbon atoms, preferably 4 to 12 carbon atoms, more preferably 8 to 12 carbon atoms,
**ii)** an acid that is characterized by a weight loss of at least 80 % at a temperature of 220°C, preferably of at least 80 % at a temperature of 200°C and more preferably of at least 80 % at a temperature of 180°C, in each case determined by thermal gravimetric analysis, and
**iii)** a solvent.

|**2b**| According to a preferred embodiment of the liquid composition according to the invention, the diamine **i),** the acid **ii)** and the salt thereof are as defined in any of the 8^{th} to the 17^{th} embodiment of the process according to the invention. This preferred embodiment is a 2^{nd} embodiment of the liquid composition according to the present invention, that preferably depends on the 1^{st} embodiment.

|**3b**| According to a further preferred embodiment of the liquid composition according to the invention, the molar ratio of the acid **ii)** to the diamine **i)** in the liquid composition is in the range from 0.5 to 2.0, preferably in the range from 0.8 to 1.5 and more preferably in the range from 0.9 to 1.1. This preferred embodiment is a 3^{rd} embodiment of the liquid composition according to the present invention, that preferably depends on the 1^{st} or the 2^{nd} embodiment.

|**4b**| According to a further preferred embodiment of the liquid composition according to the invention, the solvent **iii)** is as defined in the 19th embodiment of the process according to the invention. This preferred embodiment is a 4^{th} embodiment of the liquid composition according to the present invention, that preferably depends on any of the 1^{st} to the 3^{rd} embodiment.

|**5b**| According to a further preferred embodiment of the liquid composition according to the invention, the liquid composition comprises the diamine **i)** and the acid **ii)** in a total amount in the range from 1 to 40 wt.-%, preferably in the range from 2 to 35 wt.-%, more preferably in the range from 3 to 20 wt.-% and even more preferably in the range from 4 to 10 wt.-%, in each case based on the total weight of the liquid composition. This preferred embodiment is a 5^{th} embodiment of the liquid composition according to the present invention, that preferably depends on any of the 1^{st} to the 4^{th} embodiment.

|**6b**| According to a further preferred embodiment of the liquid composition according to the invention, the liquid composition has a pH-value determined at 25°C in the range from 2 to 10, preferably in the range from 4 to 8 and more preferably in the range from 5 to 7. This preferred embodiment is a 6^{th} embodiment of the liquid composition according to the present invention, that preferably depends on any of the 1^{st} to the 5^{th} embodiment.

|**1c**| A contribution to solving at least one of the objects according to the invention is also made by the use of the liquid composition according to the invention, preferably of the liquid composition according to any of its 1^{st} to the 6^{th} embodiment, as a primer solution for improving the coverage of a solid electrolyte layer with a polymeric outer layer, wherein the solid electrolyte layer comprises a conductive polymer **CP1** and wherein the polymeric outer layer comprises a conductive polymer **CP2.**

|**2c**| According to a preferred embodiment of the use according to the invention, the conductive polymer **CP1** and the conductive polymer **CP2** are as defined in any of the 2^{nd} to the 7^{th} embodiment of the process according to the invention. This preferred embodiment is a 2^{nd} embodiment of the use according to the present invention, that preferably depends on the 1^{st} embodiment.

|**1d**| A contribution to solving at least one of the objects according to the invention is also made by an electrolytic capacitor obtainable, preferably obtained, by the process according to the invention.

|**2d**| According to a preferred embodiment of the electrolytic capacitor according to the invention, the capacitor is an aluminium capacitor or a tantalum capacitor. This preferred embodiment is a 2^{nd} embodiment of the electrolytic capacitor according to the present invention, that preferably depends on the 1^{st} embodiment.

### DETAILED DESCRIPTION

### Polythiophenes

The polythiophenes that can be present as conductive polymer **CP1** and **CP2** in the solid electrolyte layer or in the polymeric outer layer of the electrolytic capacitor obtainable by the process of the present invention are preferably polythiophenes with repeating units of the general formula (I), of the general formula (II), of the general formula (III) or polythiophenes comprising combinations of these repeating units: 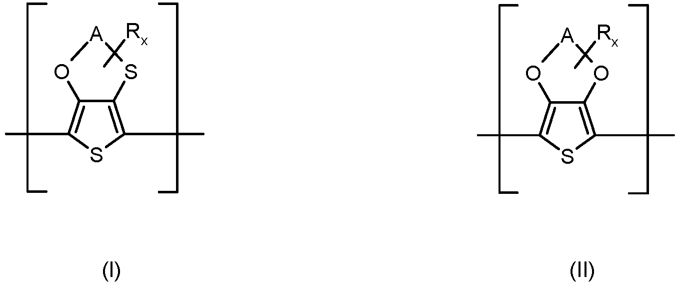 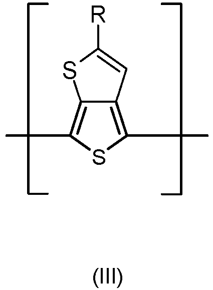 in which
- A: is an optionally substituted C₁-C₅-alkylene radical,
- R: is independently H, a linear or branched, optionally substituted C₁-C₁₈-alkyl radical, an optionally substituted C₅-C₁₂-cycloalkyl radical, an optionally substituted C₆-C₁₄-aryl radical, an optionally substituted C₇-C₁₈-aralkyl radical, an optionally substituted C₁-C₄-hydroxyalkyl radical or a hydroxyl radical,
- x: is an integer from 0 to 8 and,
in the case that a plurality of R radicals are bonded to A, they may be the same or different.

The general formulae (I) and (II) should be understood such that x substituents R may be bonded to the alkylene radical A.

In the context of the invention, the prefix *"poly"* should be understood to mean that more than one identical or different repeating unit is present in the polymer or polythiophene. The polythiophenes contain a total of n repeating units of the general formula (I) or of the general formula (II) or of the general formula (III) or of the general formulae (I) and (II) or of the general formulae (I) and (III) or of the general formulae (II) and (III) or of the general formulae (I), (II) and (III), where n is an integer of 2 to 2000, preferably 2 to 100. The repeating units of the general formula (I) or of the general formula (II) or of the general formula (III) or the repeating units of the general formulae (I) and (II) or the repeating units of the general formulae (I) and (III) or the repeating units of the general formulae (II) and (III) or the repeating units of the general formulae (I), (II) and (III) may each be the same or different within a polythiophene. Preference is given to polythiophenes having in each case identical repeating units of the general formula (I) or of the general formula (II) or of the general formula (III) or having in each case identical repeating units of the general formulae (I) and (II), or of the general formulae (I) and (III), or of the general formulae (II) and (III), or having in each case identical repeating units of the general formulae (I), (II) and (III). Particular preference is given to polythiophenes having in each case identical repeating units of the general formula (I) or of the general formula (II) or having in each case identical repeating units of the general formulae (I) and (II). At the end groups, the polythiophenes preferably each bear H.

In the context of the invention, C₁-C₅-alkylene radicals A are preferably methylene, ethylene, n-propylene, n-butylene or n-pentylene. C₁-C₁₈-Alkyl R is preferably linear or branched C₁-C₁₈-alkyl radicals such as methyl, ethyl, n- or isopropyl, n-, iso-, sec- or tert-butyl, n-pentyl, 1-methylbutyl, 2-methylbutyl, 3-methylbutyl, 1-ethylpropyl, 1,1-dimethylpropyl, 1,2-dimethylpropyl, 2,2-dimethylpropyl, n-hexyl, n-heptyl, n-octyl, 2-ethylhexyl, n-nonyl, n-decyl, n-undecyl, n-dodecyl, n-tridecyl, n-tetradecyl, n-hexadecyl or n-octadecyl, C₅-C₁₂-cycloalkyl radicals R are, for example, cyclopentyl, cyclohexyl, cycloheptyl, cyclooctyl, cyclononyl or cyclodecyl, C₆-C₁₄-aryl radicals R are, for example, phenyl or naphthyl, and C₇-C₁₈-aralkyl radicals R are, for example, benzyl, o-, m-, p-tolyl, 2,3-, 2,4-, 2,5-, 2,6-, 3,4-, 3,5-xylyl or mesityl. The above list serves to illustrate the invention by way of example and should not be considered to be exclusive.

In the context of the invention, any further substituents of the A radicals and/or of the R radicals include numerous organic groups, for example alkyl, cycloalkyl, aryl, aralkyl, alkoxy, halogen, ether, thioether, disulfide, sulfoxide, sulfone, sulfonate, amino, aldehyde, keto, carboxylic ester, carboxylic acid, carbonate, carboxylate, cyano, alkylsilane and alkoxysilane groups, and also carboxamide groups.

The polythiophenes may be uncharged or cationic. In preferred embodiments, they are cationic, *"cationic"* relating only to the charges which reside on the main polythiophene chain. According to the substituent on the R radicals, the polythiophenes may bear positive and negative charges in the structural unit, in which case the positive charges are on the main polythiophene chain and the negative charges are, if present, on the R radicals substituted by sulfonate or carboxylate groups. The positive charges of the main polythiophene chain may be partly or fully saturated by the anionic groups which may be present on the R radicals. Viewed overall, the polythiophenes in these cases may be cationic, uncharged or even anionic. Nevertheless, in the context of the invention, all are considered to be cationic polythiophenes, since the positive charges on the main polythiophene chain are crucial. The positive charges are not shown in the formulae, since their exact number and position cannot be stated unambiguously. The number of positive charges is, however, at least 1 and at most n, where n is the total number of all repeating units (identical or different) within the polythiophene.

The positive charge of the polythiophenes can be balanced by sulfonate- or carboxylate-substituted and thus negatively charged R radicals (so called *"self-doped polythiophenes"*) or by counter-ions (so called *"foreign-doped polythiophenes"*)*.*

According to a first preferred embodiment of the polythiophenes used as conductive polymer **CP1** and/or **CP2,** the polythiophenes are self-doped polythiophenes in which alkylene radical A in repeating units (I), (II) or (III) carries an anionic functional group. In this contest is particularly preferred that the polythiophenes comprise, to the extent of at least 50 %, still more preferably to the extent of at least 75 %, still more preferably to the extent of at least 95 % and most preferably to the extent of 100 %, recurring units of the formula (IV) 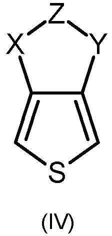 in which
- X,Y: are identical or different and denote O, S, N-R¹, wherein R¹ denotes aryl, C₁-C₁₈-alkyl or hydrogen;
- Z: is an organic group carrying an anionic functional group, preferebly a SO₃⁻ group, wherein it is particularly preferred that Z denotes -(CH₂)ₘ-CR²R³-(CH₂)ₙ-,
- R²: denotes hydrogen, -(CH₂)*ₛ*-O-(CR⁴₂)ₚ-SO₃⁻M⁺ or -(CH₂*)ₚ*-SO₃⁻M⁺,
- R³: denotes -(CH₂*)ₛ*-O-(CR⁴₂)ₚ-SO₃⁻M⁺ or -(CH₂*)ₚ*-SO₃⁻M⁺,
- M⁺: denotes a cation,
- m,n: are identical or different and denote an integer from 0 to 3,
- R⁴: denotes hydrogen or a C₁-C₁₀ alkyl group, preferably a methyl group, wherein residue R⁴ can be the same or different,
- s: denotes an integer from 0 to 10 and
- p: denotes an integer from 1 to 18.

The percentage figures stated above are intended in this context to express the numerical content of the units of the structural formula (IV) in the total number of monomer units in the self-doped conductive polymer.

Suitable cations M⁺ are e.g. H⁺, Li⁺, Na⁺, K⁺, Rb⁺, Cs⁺ and NH₄⁺. Particularly suitable cations are Na⁺ and K⁺.

Particularly preferred monomers of the structural formula (IV) are those in which
- X,Y: denote O,
- Z: denotes -(CH₂)ₘ-CR²R³-(CH₂)ₙ-,
- R²: denotes hydrogen or -(CH₂*)ₛ*-O-(CH₂)ₚ-SO₃⁻M⁺, -(CH₂*)ₚ*-SO₃⁻M⁺ or -(CH₂*)ₛ*-O-(CH₂)ₚ-CHR⁴- SO₃⁻M⁺,
- R³: denotes -(CH₂*)ₛ*-O-(CH₂)ₚ-SO₃⁻M⁺, -(CH₂*)ₚ*-SO₃⁻M⁺ or -(CH₂*)ₛ*-O-(CH₂)ₚ-CHR⁴-SO₃⁻M⁺,
- M⁺: denotes a cation,
- m,n: are identical or different and denote an integer from 0 to 3,
- R⁴: denotes hydrogen a methyl group or an ethyl group;
- s: denotes an integer from 0 to 10 and
- p: denotes an integer from 1 to 18.

Very particularly preferred monomers of the structural formula (IV) are those in which
- X,Y: denote O,
- Z: denotes -(CH₂)-CR²R³-(CH₂)ₙ-,
- R²: denotes hydrogen,
- R³: denotes -(CH₂*)ₛ*-O-(CH₂)ₚ-SO₃⁻M⁺, -(CH₂*)ₚ*-SO₃⁻M⁺, or -(CH₂*)ₛ*-O-(CH₂)ₚ-CH(CH₃)-SO₃⁻M⁺ or -(CH₂*)ₛ*-O-(CH₂)ₚ-CH(CH₂CH₃)-SO₃⁻M⁺,
- M⁺: denotes Na⁺ or K⁺,
- n: denotes 0 or 1,
- s: denotes 0 or 1 and
- p: denotes 2, 3, 4 or 5.

Suitable Examples of self-doped polythiophenes are disclosed in WO-A-2014/048562 and in US-A-2015/0337061. Concrete examples of very particularly preferred self-doped conductive polymers include poly(4-[(2,3-dihydrothieno[3,4-b]-[1,4]dioxin-2-yl)methoxy]propane-1-sulfonic acid), poly(4-[(2,3-dihydrothieno-[3,4-b][1,4]dioxin-2-yl)methoxy]butane-1-sulfonic acid) (PEDOT-S), poly(4-[(2,3-dihydrothieno[3,4-b][1,4]dioxin-2-yl)methoxy]butane-2-sulfonic acid) or a mixture thereof.

According to a second preferred embodiment of the polythiophenes used as conductive polymer **CP1** and/or **CP2,** the polythiophenes are foreign-doped polythiophenes that preferably comprise polymeric counter-ions to balance the positive charges, the latter also being referred to hereinafter as "polyanions". Thus, according to that embodiment of the polythiophene used as conductive polymer **CP1** and/or **CP2,** the polythiophene is a cationic polythiophene that comprises a polyanions serving as a counter-ion for the polythiophene

Suitable examples of foreign-doped polythiophenes are those that comprise counter-ions to balance the positive charges on the polythiophene-chain. Polyanions are preferred over monomeric anions as counter-ions, since they contribute to film formation and, owing to their size, lead to thermally more stable, electrically conductive films. Polyanions here may, for example, be anions of polymeric carboxylic acids, such as polyacrylic acids, polymethacrylic acid or polymaleic acids, or polymeric sulfonic acids, such as polystyrene sulfonic acids and polyvinyl sulfonic acids. These polycarboxylic and -sulfonic acids may also be copolymers of vinylcarboxylic and vinylsulfonic acids with other polymerizable monomers, such as acrylic esters and styrene. A preferred polyanion is an anion of a polymeric carboxylic or sulfonic acid. A particularly preferred polyanion is the anion of polystyrene sulfonic acid (PSS) or a derivative thereof. The molecular weight of the polyacids which afford the polyanions is preferably 1000 to 2000000, more preferably 2000 to 500000. The polyacids or alkali metal salts thereof are commercially available, for example polystyrene sulfonic acids and polyacrylic acids, or else are preparable by known processes.

A concrete example of a particularly preferred foreign-doped polythiophene is a complex of poly(3,4-ethylenedioxythiophene) and an anion of polystyrene sulfonic acid (PEDOT/PSS). According to a particularly preferred embodiment of the process according to the invention, the solid electrolyte layer and the polymeric outer layer comprise PEDOT/PSS as the conductive polymers **CP1** and **CP2,** respectively.

### Process for producing a capacitor

The process for the preparation of an electrolytic capacitor according to the invention comprises the process steps
**A)** providing a porous electrode body made of an electrode material, the porous electrode body comprising:
   a dielectric layer that at least partially covers a surface of the electrode material, and
   a solid electrolyte layer that comprises a conductive polymer **CP1,**
   wherein the dielectric layer is arranged between the electrode material and the solid electrolyte layer;
**B)** applying a primer solution onto at least a part of the surface of the porous electrode body, preferably onto at least a part of the surface of the solid electrolyte layer, wherein the primer solution comprises
   **i)** a diamine comprising at least 3 carbon atoms, preferably 4 to 12 carbon atoms, more preferably 8 to 12 carbon atoms,
   **ii)** an acid that is characterized by a weight loss of at least 80 % at a temperature of 220°C, preferably of at least 80 % at a temperature of 200°C and more preferably of at least 80 % at a temperature of 180°C, in each case determined by thermal gravimetric analysis, and
   **iii)** a solvent;
   preferably followed by an at least partial removal of solvent **iii),** preferably by a complete removal of solvent **iii);**
**C)** applying a liquid composition comprising
   **I)** a conductive polymer **CP2,** and
   **II)** a solvent, preferably water;
   onto at least a part of the surface of the porous electrode body obtained in process step **B);**
**D)** at least partially removing solvent **II)** for the formation of a polymeric outer layer that at least partially covers the surface of the porous electrode body, wherein the at least partial removal of the solvent is preferably accomplished by heating the porous electrode bodies obtained in process step C) to a temperature in the range from 80 to 200°C, preferably 100 to 180°C and more preferably 120 to 160°C.

### Process step A)

In process step **A)** a porous electrode body made of an electrode material is provided, wherein a dielectric layer at least partially covers a surface of this electrode material and wherein a solid electrolyte layer at least partially covers the surface of the dielectric layer.

In principle, the porous electrode body can be manufactured in that a valve-metal powder with a high surface area is pressed and sintered to form a porous electrode body. In this context, an electrical contact wire preferably made from a valve metal, such as tantalum, is conventionally pressed into the porous electrode body. The porous electrode body is then coated with a dielectric, that is, an oxide layer, for example, by electrochemical oxidation. As an alternative, metal films can be etched and coated with a dielectric by electrochemical oxidation in order to obtain an anode film with a porous region. In the case of a wound capacitor, an anode film with a porous region, which forms the electrode body, and a cathode film are separated by separators and wound up.

Within the scope of the invention, metals of which the oxide coatings do not allow the flow of current uniformly in both directions are understood as valve metals. With a voltage applied at the anode, the oxide layers of the valve metals block the flow of current, while in the case of a voltage applied to the cathode, considerable currents occur, which can destroy the oxide layer. The valve metals include Be, Mg, Al, Ge, Si, Sn, Sb, Bi, Ti, Zr, Hf, V, Nb, Ta and W and an alloy or compound of at least one of these metals with other elements. The most well-known representatives of the valve metals are Al, Ta and Nb. Combinations of electrical properties comparable with a valve metal are those with metallic conductivity, which can be oxidised and of which the oxide layers provide the properties described above. For example, NbO shows metallic conductivity, but is not generally regarded as a valve metal. However, layers of oxidised NbO show the typical properties of valve-metal oxide layers, so that NbO or an alloy or compound of NbO with other elements are typical examples of such compounds with electrical properties comparable with a valve metal. Electrode materials made of tantalum, aluminium and such electrode materials which are based on niobium or niobium oxide are preferred. Tantalum is particularly preferred as an electrode material.

For the manufacture of the porous electrode body often with a porous region, the valve metals can be sintered, for example, in powdered form to provide a generally porous electrode body, or alternatively, a porous structure is imprinted onto a metallic body. The latter can be implemented, for example, by etching a film.

In the following, for the sake of simplicity, bodies with a porous region are also referred to as porous. For example, electrode bodies with a porous region are also referred to as porous electrode bodies. On the one hand, the porous bodies can be penetrated by a plurality of channels and therefore be sponge-like. This is often the case if tantalum is used in the construction of the capacitor. On the other hand, pores can be present only at the surface, and the region disposed below the surface pores can be formed in a solid manner. This is often observed, if aluminium is used in the capacitor construction.

The porous electrode bodies manufactured in this manner are then oxidised, for example in an appropriate electrolyte, for example, phosphoric acid or an aqueous solution of ammonium adipate, by applying a voltage, in order to form the dielectric. The magnitude of this forming voltage is dependent upon the oxide-layer thickness to be achieved or respectively the subsequent operating voltage of the capacitor. Preferred forming voltages lie in a range of from 1 to 1000 V, particularly preferably in a range of from 10 to 200 V, more particularly preferably in a range of from 15-100 V, more preferably in a range of from 20-50 V.

The porous electrode bodies used preferably have a porosity of 10 to 90 %, preferably of 30 to 80 %, particularly preferably of 50 to 80 %, and an average pore diameter of from 10 to 10000 nm, preferably from 50 to 5000 nm, particularly preferably from 100 to 3000 nm.

For the formation of a solid electrolyte layer that at least partially covers a surface of the dielectric layer, a conductive polymer **CP1** is deposited, for example by means of oxidative polymerization, on the dielectric chemically or electrochemically. To this end, precursors for preparing conductive polymers, one or more oxidizing agents, and if appropriate counter-ions are applied together or successively to the dielectric of the porous electrode body and polymerized chemically and oxidatively, or precursors for producing conductive polymers and counter-ions are polymerized by electrochemical polymerization on the dielectric of the porous electrode body.

Preferably, for the formation of a solid electrolyte layer that at least partially covers a surface of the dielectric layer a dispersion comprising a conductive polymer **CP1** can be introduced into at least a part of the porous electrode body provided, wherein the dispersant is subsequently at least removed for the formation of a solid electrolyte that at least partially covers a surface of the dielectric layer.

Such a dispersion can be introduced into the porous region using known processes, for example, immersion, dipping, pouring, dripping, injection, spraying, spreading, painting or printing, for example, ink-jet printing, screen printing or tampon printing. The introduction is preferably carried out in that the porous electrode body is immersed in the dispersion and is accordingly impregnated with this dispersion. The immersion into or the impregnation with the dispersion is preferably implemented for a duration in a range of from 1 second to 120 min, particularly preferably in a range of from 10 seconds to 60 min and most preferably in a range of from 30 seconds to 15 min. The introduction of the dispersion into the anode body can be facilitated, for example, by increased or reduced pressure, vibration, ultrasound or heat.

After the porous electrode bodies have been impregnated with the dispersion as described above, the dispersant is at least partially removed, so that a solid electrolyte layer is formed, which covers the dielectric partially or completely. In this context, it is preferable that the covering of the dielectric by the solid electrolyte layer preferably amounts to at least 50 %, particularly preferably at least 70 % and most preferably at least 80 %, wherein the measurement of the capacitance of the capacitor in a dry and wet condition at 120°C allows a determination as described in DE-A-10 2005 043 828.

The removal of the dispersant is preferably carried out in that the porous electrode body is removed from the dispersion and is subsequently dried, wherein the drying preferably takes place at a temperature in a range from 20°C to 200°C, particularly preferably in a range from 50°C to 180°C and more preferably in a range from 80°C to 150°C. The drying conditions (i. e., drying time, drying pressure and drying temperature) are preferably adjusted to be within a range that ensures that at least 50 wt.-%, more preferably at least 75 wt.-%, even more preferably at least 90 wt.-%, even more preferably at least 95 wt.-% and most preferably at least 99 wt.-% of the total amount of the dispersant is removed when forming the solid electrolyte layer. In a particularly preferred embodiment of the process according to the present invention the drying conditions are adjusted to be within a range that ensures that the dispersant is completely removed when forming the solid electrolyte layer.

### Process step B)

In process step **B)** the primer solution comprising the diamine i), the acid ii) and the solvent iii) is applied onto at least a part of the porous electrode body, preferably onto at least a part of the surface of the solid electrolyte layer, preferably followed by an at least partial removal of solvent **iii),** wherein the diamine **i)** comprises at least 3 carbon atoms, preferably 4 to 12 carbon atoms, more preferably 8 to 12 carbon atoms and wherein the acid **ii)** is characterized by a weight loss of at least 80 % at a temperature of 220°C, preferably of at least 80 % at a temperature of 200°C and more preferably of at least 80 % at a temperature of 180°C.

The primer solution can be applied onto at least a part of the surface of the porous electrode body by known processes, for example by applying the primer solution to the porous electrode body provided in process step **A)** by means of spin-coating, impregnation, casting, dropwise application, spray application, vapor deposition, sputtering, sublimation, knife-coating, painting or printing, for example inkjet, screen or pad printing. The primer solution is applied at least to the corners and/or edges of the porous electrode body. In a simple manner, it is applied at least to the entire outer surface or part of the outer surface of the porous electrode body provided in process step **A).** The primer solution may additionally also be introduced into the pores of the porous electrode body. After the application, solvent **iii)** is preferably removed at least partly, for example by a thermal treatment. For the removal of solvent **iii),** preference is given to drying temperatures that ensure that the mass loss of the salt of the diamine **i)** and the acid **ii)** in that drying step is less than 10 wt.-%, preferably less than 5 wt.-% and more preferably less than 1 wt.-%, in each case determined by means of thermal gravimetric analysis and in each case based on total mass of the salt that is applied onto the surface of the porous electrode body. Preferably, the drying temperatures is less than 120°C, more preferably less than 100°C and even more preferably less than 80°C. In case of ethanolic primer solutions, the drying temperature may even be less than 60°C or may be room temperature.

The salt of the diamine **i)** and the acid **ii)** that is present in the primer solution is preferably characterized by a weight loss of at least 80 % at a temperature of 250°C, preferably of at least 80 % and a temperature of 225°C, more preferably of at least 80 % at a temperature of 200°C, and even more preferably of at least 80 % at a temperature of 190°C, in each case determined by thermal gravimetric analysis. The term *"the salt of the diamine **i)** and the acid **ii)"*** refers to the salt that is obtained if solvent **iii)** would be removed from the primer solution, e.g. by means of evaporation. In this context it is also preferred that the salt of the diamine **i)** and the acid **ii)** is characterized by a weight loss of less than 80 % at a temperature of 132°C as determined by thermal gravimetric analysis. It is also preferred that the salt of the diamine **i)** and the acid **ii)** is characterized by a solubility in water at a temperature of 25°C in the range from 5 g/L to 400 g/L, preferably 25 g/L to 350 g/L and more preferably 40 g/L to 150 g/L.

The diamine **i)** that is present in the primer solution preferably comprises 4 to 12 carbon atoms, preferably 8 to 12 carbon atoms, wherein it is particularly preferred that the diamine **i)** is an alkane-alpha,omega-diamine of the formula H₂N-(CH₂)ₓ-NH₂, wherein x is in the range from 4 to 12, preferably in the range from 8 to 12, wherein such diamines can be selected from the group consisting of 1,8-diaminooctane, 1,9-dimaninononane, 1,10-diaminodecane, 1,11-diaminoundecane, 1,12-diaminododecane and a combination of at least two of these diamines. A particularly preferred diamine is 1,10-diaminodecane.

The acid ii) that is present in the primer solution preferably has a pKa-value in the range from -2 to 7, preferably in the range from 0 to 6 and more preferably in the range from 2 to 5. Particularly preferred acids **ii)** are organic acids carrying at least one carboxylic acid group, such as aromatic or aliphatic mono- or dicarboxylic acid. Examples of suitable acids **ii)** are organic acids selected from the group consisting of formic acid, acetic acid, citric acid, butyric acid, crotonic acid, malonic acid, pivalic acid, propionic acid, maleic acid, oxalic acid, phenylglyoxylic acid, pyruvic acid, 2-ketobutyric acid, 3-oxopentanoic acid, 2-hydroxyisobutyric acid, 2-hydroxy-2-methylbutyric acid, 2-ethyl-2-hydroxybutyric acid, 2-methylpropionic acid, 2-methylheptanoic acid, 2-methylvaleric acid, 2-methylhexaoic acid, 2-methylbutanoic acid, 3-methylbutanoic acid, 2,2-dimethylbutyric acid, trans-2,3-dimethylacrylic acid, heptanoic acid, hexanoic acid, valeric acid, 4-pentanoic acid, and combinations of at least two of these acids.

The molar ratio of the acid **ii)** to the diamine **i)** in the primer solution is preferably in the range from 0.5 to 2.0, preferably in the range from 0.8 to 1.5 and more preferably in the range from 0.9 to 1.1. It is also preferred that the primer solution comprises the diamine **i)** and the acid **ii)** in a total amount in the range from 1 to 40 wt.-%, preferably in the range from 2 to 35 wt.-%, more preferably in the range from 3 to 20 wt.-% and even more preferred in the range from 4 to 10 wt.-%, in each case based on the total weight of the primer solution. The pH-value of the primer solution (determined at 25°C) in preferably in the range from 2 to 10, preferably in the range from 4 to 8 and more preferably in the range from 5 to 7.

### Process steps C) and D)

In process step **C),** a liquid composition comprising **I)** a conductive polymer **CP2,** and **II)** a solvent is applied onto at least a part of the surface of the porous electrode body obtained in process step **B)** and in process step **D)** at least a part of the solvent **II)** is removed for the formation of a polymeric outer layer that at least partially covers the surface of the porous electrode body. Removal of solvent **II)** in process step **D)** is preferably accomplished by heating the porous electrode bodies obtained in process step **C)** to a temperature in the range from 80 to 200°C, preferably 100 to 180°C and more preferably 120 to 160°C. Heating is preferably conducted for a 5 bis 45 minutes, preferably for 10 to 30 minutes.

The term *"polymeric outer layer"* as used herein preferably refers to an outer layer that, although it may comprise the very same conductive polymer as the solid electrolyte layer, nevertheless differs from the solid electrolyte layer with respect to, for example, the chemical composition, the conductivity and/or a property such as the hardness, the surface roughness, the adhesion property *etc..* The polymeric outer layer, usually having a thickness in the range from 5 to 50 µm, serves as a mechanical buffer between the capacitor anode and the cathode-side contact, preventing the cathode-side-contact to come into contact with the dielectric under mechanical stresses that may occur during the manufacture of the capacitor.

The liquid composition used in process step **C)** is preferably a dispersion, wherein the conductive polymer **CP2** is dispersed in the solvent. The term *"dispersed"* as used in context with the present invention general refers to any liquid composition in which a conductive polymer, such as a polythiophene, is somehow distributed in a homogeneous phase that is formed by the liquid solvent II) (which thus serves as a dispersant **II)** and forms the liquid phase of the liquid composition). It should be noted that transitions between a *"dispersion"* and a *"solution"* can be fluid. For that reason, no distinction is made hereafter between the terms *"dispersed"* and *"dissolved".* Likewise, no distinction is made between *"dispersion"* and *"solution"* or between *"dispersant"* and *"solvent".* Rather these terms are used synonymously hereafter.

In addition to the conductive polymer **CP2,** the liquid composition may further comprise at least one binder as an additive. Suitable binders comprise organic binders which in particular are soluble in organic solvents, such as polyolefins, polyvinyl acetate, polycarbonate, polyvinyl butyral, polyacrylic acid esters, polyacrylic acid amides, polymethacrylic acid esters, polymethacrylic acid amides, polystyrene, polyacrylonitrile, polyvinyl chloride, polyvinyl pyrrolidones, polybutadiene, polyisoprene, polyethers, polyesters, polyurethanes, polyamides, polyimides, polysulphones, polysilicones, epoxy resins, styrene-acrylate, vinyl acetate/acrylate and ethylene/vinyl acetate copolymers, polyvinyl alcohols or cellulose derivatives, can also be added to the composition. Also suitable as binders are copolymers of the above-mentioned polymers.

Applying the liquid composition comprising conductive polymer **CP2** in process step C) onto at least a part of the surface of the porous electrode body obtained in process step **B)** and the subsequent removal of the solvent in process step **D)** can be accomplished in the same way as it has been described above in connection with the application of the dispersion used to prepare the solid electrolyte layer.

According to a particular embodiment of the process according to the invention, process steps **B), C)** and **D)** are performed in that order, wherein the sequence of process steps **B), C)** and **D)** can be repeated once or several times. In this context it is particularly preferred that the sequence of process steps **B), C)** and **D)** is repeated 1 to 20 times, preferably 2 to 10 times and more preferably 2 to 6 times.

Moreover, it is also possible to first apply the primer solution onto the porous electrode body provided in process step **A),** followed by the application of the liquid composition comprising conductive polymer **CP2** in process step **C)** and the at least partial removal of solvent **II)** in process step **D).** In this case, which represents the preferred order of process steps, the primer solution is applied onto at least a part of the surface of the solid electrolyte layer of the porous electrode body provided in process step **A)** and in process step **D)** the polymeric outer layer at least partially covers the surface of the solid electrolyte layer of the porous electrode body. However, it is also possible to first from a part-layer of the polymeric outer layer by applying the liquid composition comprising conductive polymer **CP2** onto the solid electrolyte layer, followed by an at least partial removal of solvent **II),** and to then apply the primer solution onto at least a part of the surface of the porous electrode body, particularly onto at least a part of the surface of the part-layer of the polymeric outer layer, followed by further process steps C) and D). In that case, the primer solution would be applied onto at least a part of the surface of the part-layer of the polymeric outer layer of the porous electrode body.

### Encapsulation in process step E)

After a polymeric outer layer has been applied, the electrolytic capacitors can be finished, particularly encapsulated, in a manner known to the person skilled in the art. In the case of a tantalum electrolytic capacitor, the capacitor body can be coated, for example, with a graphite layer and a silver layer, as known from DE-A-10 2005 043 828, while in the case of an aluminium wound capacitor corresponding to the teaching of US 7,497,879 B2, the capacitor body is built into an aluminium cup, provided with a sealing rubber and firmly closed in a mechanical manner by flanging.

Encapsulation is preferably accomplished by sealing the capacitor body with resins, such as epoxy resins or thermoplastic resins like those disclosed in EP 0 447 165 A2. In case of an aluminium electrolytic capacitor encapsulation is preferably accomplished by providing the porous electrode body obtained in process step e) with the aluminium cup and closing it with the sealing rubber.

The features disclosed in the claims, the specification, and the drawings maybe essential for different embodiments of the claimed invention, both separately and in any combination with each other.

### DESCRIPTION OF THE DRAWINGS

The following schematic drawings show aspects of the invention for improving the understanding of the invention in connection with some exemplary illustrations.

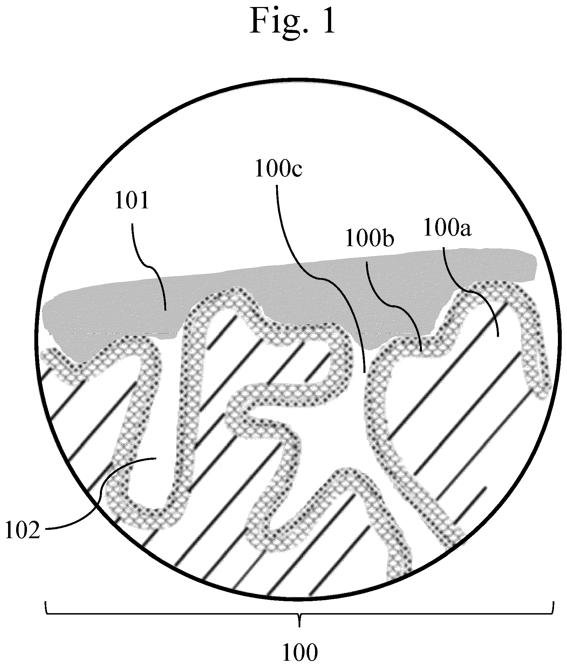

Fig. 1 shows a schematic sectional view through a part of an electrolytic capacitor obtainable by the process according to the invention. The capacitor comprises a porous electrode body 100 comprising pores 102, made mostly from a porous electrode material 100a such as aluminium or tantalum. On the surface of the electrode material 100a, a dielectric layer 100b is formed as a thin layer, so that an anode body is formed which is still porous, comprising the porous electrode body 100 made of the electrode material 100a and the dielectric layer 100b. On the dielectric layer 100b, there follows, optionally after further layers, a layer of a solid electrolyte 100c, so that a capacitor body is formed, comprising the electrode body 100 made of the electrode material 100a, the dielectric layer 100b and the solid electrolyte layer 100c. The solid electrolyte layer 100c is at least partially covered by a polymeric outer layer 101.

### TEST METHODS:

### Leakage current measurement

The leakage current (DCL) was determined 3 minutes after application of a 15 V voltage using a Keithley 199 multimeter. The leakage current of 5 capacitors was measured and the average leakage current (DCL) value was determined.

### pH-value

The pH-value is determined with a pH meter. After calibration the pH electrode is put into the slowly stirred dispersion or solution until the reading of the pH is constant.

### Thermogravimetric Analysis

Thermogravimetric analysis was performed on a NETZSCH TG 209 F1 Libra thermogravimetric analyzer. The measurements were conducted under a 20 ml/min nitrogen/oxygen, 80/20, flow from room temperature to 400°C with a heating rate of 10 K/min. Before performing thermogravimetric analysis, the primer solution was dried in a fume hood under ambient conditions until the residual solvent is evaporated. The corresponding acids were measured as supplied (each acid having a purity of at least 97 %).

### Average

If not otherwise mentioned, the average corresponds to the arithmetical average value.

### EXAMPLES

### Comparative Examples 1- 6 and Examples 1-29

### Process step A):

Tantalum powder having a specific capacitance of 50,000 CV/g was pressed to pellets with inclusion of a tantalum wire and sintered in order to form a porous electrode body having dimensions of 1.5 mm × 2.9 mm × 4.0 mm. The porous electrode bodies were anodized in a phosphoric acid electrolyte at 25 V to form a dielectric, in order to obtain anode bodies. The anode bodies thus obtained were dipped into a PEDOT/PSS dispersion (Clevios K Nano LV, Heraeus Epurio) for 1 minute. Thereafter, drying was carried out at 120°C for 10 min. The dipping and drying were carried out 10 further times.

### Process step B) and C):

A primer solution was prepared in the following manner:
A beaker was charged with 90 g of the corresponding solvent listed in Table 1. Subsequently, either 35.54 mmol (2 eq.) of a mono-carboxylic acid or 16.77 mmol (1 eq.) of a dicarboxylic acid from Table 1 were dissolved in the solvent. Next 16.77 mmol (1 eq.) of the desired crosslinker (diamine) from Table 1 was added to the solution. Upon complete dissolution, the pH was adjusted with the corresponding carboxylic acid to 6.0 and additional solvent was added to afford 100 g of the primer solution.

Subsequently, the capacitor bodies obtained in process step **A)** were impregnated in the primer solution for 1 minute. Thereafter, drying was carried out at either 60°C for 30 min (when using ethanol or mixtures of ethanol and water as solvent) or at 120°C for 10 min (when using water or other solvent mixtures as listed in Table 1).

### Process step D):

Next, the capacitor bodies obtained in process step **C)** were impregnated with an aqueous poly(3,4-ethylenedioxy-thiophene)/polystyrene sulphonate solution (Clevios K V2 HV, Heraeus Epurio) for 1 minute. Thereafter, drying was carried out at 120°C for 10 min for the formation of the polymeric outer layer.

Impregnation and drying of the primer solution and application and drying of Clevios K V2 HV were repeated two additional times.

### Process step E):

The capacitor bodies obtained in process **D)** were then covered with a graphite layer and thereafter with a silver layer in order to obtain the finished capacitors in this way.

The capacitor bodies of process step **E)** were placed under atmospheric condition of 85°C and 85% relative humidity for 100 hours. Thereafter, the capacitor bodies were dried at 120°C for 10 min. Subsequently, the leakage current of the capacitors was measured. The average leakage current is given in Table 1. The mass loss for the acid and the salt is determined by means of thermal gravimetric analysis according to the test method disclosed herein.

| | **acid ii)** | **diamine i)** | **solvent iii)** | **at least 80% weight loss of acid at 220°** | **at least 80% weight loss of salt at 250°C** | **l. c. [µA]** |
|---|---|---|---|---|---|---|
| C. Ex. 1 | pTSA | 1,10-diaminodecane | H₂O | - | - | 163 |
| C. Ex. 2 | Acetic acid | ethylenediamine | H₂O | + | + (132°C) | 168 |
| C. Ex. 3 | 1,2,3,4-butanetetra-carboxylic acid | 1,10-diaminodecane | H₂O | - | - | 249 |
| C. Ex. 4 | adipic acid | 1,5-pentanediamine | H₂O | - | - | 201 |
| C. Ex. 5 | pTSA | ethylenediamine | H₂O | - | - | 346 |
| C. Ex. 6 | citric acid | 1,10-diaminodecane | H₂O | - | + | 145 |
| Ex. 1 | malonic acid | 1,10-diaminodecane | H₂O | + | + | 44 |
| Ex. 2 | maleic acid | 1,10-diaminodecane | H₂O | + | + | 42 |
| Ex. 3 | acetic acid | 1,10-diaminodecane | H₂O | + | + | 63 |
| Ex. 4 | oxalic acid | 1,6-diaminohexane | H₂O | + | + | 86 |
| Ex. 5 | phenylglyoxylic acid | 1,9-diaminononane | H₂O/PG ME | + | + | 95 |
| Ex. 6 | pyruvic acid | 1,7-diaminoheptane | H₂O | + | + | 77 |
| Ex. 7 | 2-ketobutyric acid | 1,8-diaminooctane | H₂O/PG ME | + | + | 92 |
| Ex. 8 | 3-oxopentanoic acid | 1,8-diaminooctane | H₂O/PG ME | + | + | 81 |
| Ex. 9 | 2-hydroxyisobutyric acid | 1,10-diaminodecane | H₂O | + | + | 45 |
| Ex. 10 | 2-hydroxy-2-methylbutyric acid | 1,12-diaminododecane | H₂O/PG ME | + | + | 84 |
| Ex. 11 | 2-ethyl-2-hydroxybutyric acid | 1,10-diaminodecane | H₂O | + | + | 74 |
| Ex. 12 | 2-methylheptanoic acid | 1,10-diaminodecane | EtOH | + | + | 41 |
| Ex. 13 | heptanoic acid | 1,11-diaminoundecane | EtOH | + | + | 71 |
| Ex. 14 | hexanoic acid | 1,11-diaminoundecane | EtOH | + | + | 61 |
| Ex. 15 | 2-methylhexanoic acid | 1,11-diaminoundecane | EtOH | + | + | 48 |
| Ex. 16 | 2-methylvaleric acid | 1,10-diaminodecane | EtOH/ H₂O | + | + | 44 |
| Ex. 17 | 3-methylvaleric acid | 1,9-diaminononane | H₂O/PnP | + | + | 67 |
| Ex. 18 | valeric acid | 1,9-diaminononane | H₂O/PnP | + | + | 68 |
| Ex. 19 | 4-pentenoic acid | 1,9-diaminononane | EtOH | + | + | 88 |
| Ex. 20 | 2,2-dimethylbutyric acid | 1,10-diaminodecane | EtOH | + | + | 43 |
| Ex. 21 | *trans-2,3-*dimethylacrylic acid | 1,10-diaminodecane | EtOH | + | + | 37 |
| Ex. 22 | 2-methylbutanoic acid | 1,10-diaminodecane | EtOH | + | + | 35 |
| Ex. 23 | 3-methylbutanoic acid | 1,12-diaminododecane | H₂O/PG ME | + | + | 79 |
| Ex. 24 | butyric acid | 1,12-diaminododecane | H₂O/PG ME | + | + | 72 |
| Ex. 25 | crotonic acid | 1,10-diaminodecane | EtOH | + | + | 66 |
| Ex. 26 | pivalic acid | 1,10-diaminodecane | EtOH | + | + | 59 |
| Ex. 27 | propionic acid | 1,9-diaminononane | H₂O | + | + | 74 |
| Ex. 28 | 2-methylpropanoic acid | 1,8-diaminooctane | EtOH/H₂ O | + | + | 62 |
| Ex. 29 | formic acid | 1,8-diaminooctane | H₂O | + | + | 96 |

| | | | | | | |
|---|---|---|---|---|---|---|
| pTSA = p-toluene sulfonic acid I.c. = leakage current PGME = 1-methoxy-2-propanol PnP = propylene glycol n-propyl ether + = weight loss for acid/salt is below the limit indicated in the first line of the table - = weight loss for acid/salt is above the limit indicated in the first line of the table | | | | | | |

### KEY TO REFERENCE NUMBERS

- 100: porous electrode body
100a electrode material
100b dielectric
100c solid electrolyte layer
- 101: polymeric outer layer
- 102: pores

## Claims

1. A process for the preparation of an electrolytic capacitor, comprising the process steps:
**A)** providing a porous electrode body (100) made of an electrode material (100a), the porous electrode body (100) comprising:
a dielectric layer (100b) that at least partially covers a surface of the electrode material (100a), and
a solid electrolyte layer (100c) that comprises a conductive polymer **CP1,** wherein the dielectric layer (100b) is arranged between the electrode material (100a) and the solid electrolyte layer (100c);
**B)** applying a primer solution onto at least a part of the surface of the porous electrode body (100), wherein the primer solution comprises
**i)** a diamine comprising at least 3 carbon atoms,
**ii)** an acid that is **characterized by** a weight loss of at least 80 % at a temperature of 220°C as determined by thermal gravimetric analysis, and
**iii)** a solvent;
preferably followed by an at least partial removal of solvent **iii);**
**C)** applying a liquid composition comprising
**I)** a conductive polymer **CP2,** and
**II)** a solvent;
onto at least a part of the surface of the porous electrode body (100) obtained in process step **B);**
**D)** at least partially removing solvent **II)** for the formation of a polymeric outer layer (101) that at least partially covers the surface of the porous electrode body (100).

2. The process according to claim 1, wherein removal of solvent **II)** in process step **D)** is accomplished by heating the porous electrode bodies (100) obtained in process step **C)** to a temperature in the range from 80 to 200°C.

3. The process according to claim 1 or 2, wherein the solid electrolyte layer (100c) comprises, as conductive polymer **CP1,** a polythiophene.

4. The process according to any of claims 1 to 3, wherein the polymeric outer layer (101) comprises, as conductive polymer **CP2,** a polythiophene.

5. The process according to any of claims 1 to 4, wherein the salt of the diamine **i)** and the acid **ii)** is **characterized by** a weight loss of at least 80 % at a temperature of 250°C as determined by thermal gravimetric analysis.

6. The process according to any of claims 1 to 5, wherein the salt of the diamine **i)** and the acid **ii)** is **characterized by** a weight loss of less than 80 % at a temperature of 132°C as determined by thermal gravimetric analysis.

7. The process according to any of claims 1 to 6, wherein the salt of the diamine **i)** and the acid **ii)** is **characterized by** a solubility in water or ethanol at a temperature of 25°C in the range from 5 g/L to 400 g/L.

8. The process according to any of claim 1 to 7, wherein the diamine **i)** comprises 4 to 12 carbon atoms.

9. The process according to claim 8, wherein the diamine **i)** is alkane-alpha,omega-diamine of the formula H₂N-(CH₂)ₓ-NH₂, wherein x is in the range from 4 to 12.

10. The process according to claim 9, wherein the diamine **i)** is selected from the group consisting of 1,8-diaminooctane, 1,9-dimaninononane, 1,10-diaminodecane, 1,11-diaminoundecane, 1,12-diaminododecane and a combination of at least two of these diamines.

11. The process according to claims 1 to 10, wherein the acid **ii)** is an organic acid carrying at least one carboxylic acid group.

12. The process according to claim 11, wherein the acid **ii)** is selected from the group consisting of formic acid, acetic acid, citric acid, butyric acid, crotonic acid, malonic acid, pivalic acid, propionic acid, maleic acid, oxalic acid, phenylglyoxylic acid, pyruvic acid, 2-ketobutyric acid, 3-oxopentanoic acid, 2-hydroxyisobutyric acid, 2-hydroxy-2-methylbutyric acid, 2-ethyl-2-hydroxybutyric acid, 2-methylpropionic acid, 2-methylheptanoic acid, 2-methylvaleric acid, 2-methylhexaoic acid, 2-methylbutanoic acid, 3-methylbutanoic acid, 2,2-dimethylbutyric acid, trans-2,3-dimethylacrylic acid, heptanoic acid, hexanoic acid, valeric acid, 4-pentanoic acid, and combinations of at least two of these acids.

13. A liquid composition, comprising:
**i)** a diamine comprising at least 3 carbon atoms,
**ii)** an acid that is **characterized by** a weight loss of at least 80 % at a temperature of 220°C as determined by thermal gravimetric analysis, and
**iii)** a solvent.

14. The liquid composition to claim 13, wherein the diamine **i)** and the acid **ii)** are as defined in any of claims 5 to 12.

15. Use of the liquid composition according to claims 13 and 14 as a primer solution for improving the coverage of a solid electrolyte layer (100c) with a polymeric outer layer (101), wherein the solid electrolyte layer (100c) comprises a conductive polymer **CP1** and wherein the polymeric outer layer (101) comprises a conductive polymer **CP2.**
